# EUROPÄISCHE PATENTSCHRIFT

(11) **EP 2 984 356 B1**
(45) Veröffentlichungstag und Bekanntmachung des Hinweises auf die Patenterteilung: **12.06.2019**
(21) Anmeldenummer: 14722526.2
(22) Anmeldetag: 03.03.2014
(51) Int. Cl.: F16B 37/06, B23P 19/06

(54) **VERFAHREN ZUM BEFESTIGEN EINES FÜGEELEMENTES IN EINEM METALLBLECH SOWIE ANORDNUNG AUS EINEM FÜGEELEMENT UND EINEM METALLBLECH**
METHOD FOR SECURING A JOINT ELEMENT IN A METAL SHEET, AND ARRANGEMENT OF A JOINT ELEMENT AND A METAL SHEET
PROCÉDÉ PERMETTANT DE FIXER UN ÉLÉMENT À ASSEMBLER DANS UNE TÔLE MÉTALLIQUE, ET AGENCEMENT D'UN ÉLÉMENT À ASSEMBLER ET D'UNE TÔLE MÉTALLIQUE

(30) Priorität: 10.04.2013 DE 102013103609; 25.04.2013 DE 102013104224
(43) Veröffentlichungstag der Anmeldung: 17.02.2016
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB
(86) Internationale Anmeldenummer: PCT/DE2014/100072
(87) Internationale Veröffentlichungsnummer: WO 2014/166478

(56) Entgegenhaltungen:
- DE-A1- 19 808 628
- DE-U1-202004 021 831
- US-A- 2 170 472

## Beschreibung

Die Erfindung bezieht sich auf ein Verfahren gemäß Patentanspruch 1 sowie auf eine Anordnung aus einem Fügeelement und einem eine Fügeöffnung aufweisenden Metallblech gemäß Patentanspruch 10.

Verfahren zum Befestigen von Fügeelementen in Metallblechen sind in unterschiedlichen Ausführungen bekannt.

Die DE 20 2004 021 831 U1 zeigt beispielsweise ein Bauteil mit einem einen Flansch bildenden Kopf und einem sich vom Kopf erstreckenden Schaft, bei dem der Schaft einen dem Kopf benachbarten Umformabschnitt und einen daran angeschlossenen Schaftabschnitt aufweist, wobei der Querschnitt des Umformabschnittes gegenüber dem benachbarten Schaftabschnitt verdickt ist und der dafür vorgesehen ist, beim Einpressen des Bauteils in eine Baukomponente auf der dem Kopf entgegengesetzten Seite der Baukomponente durch Kaltumformung in einen Gegenflansch überführt zu werden, so dass sich der Schaft zwischen dem Umformabschnitt und dem benachbarten Schaftabschnitt verjüngt und im Übergangsbereich eine Einlaufschräge bildet.

Die US 2,170,472 A offenbart ein Verfahren zur Befestigung von Muttern an einem Metallblech. Die zum Einsetzen eines Schaftabschnittes der Muttern vorgesehenen Öffnungen im Metallblech weisen einen von einer runden Querschnittsform abweichenden Querschnitt auf, welcher sich vom Querschnitt des Schaftabschnittes der Muttern unterscheidet. Zum Fixieren der Muttern am Metallblech wird der Schaftabschnitt der Muttern mittels Fügen verformt.

Aus der DE 198 08 628 A1 ist beispielsweise eine Vorrichtung zur Befestigung von Muttern in der Art einer Annietmutter bekannt, die aus einer Mutter mit einem koaxial anschließenden hülsenartigen Verbindungsteil besteht. Das Verbindungsteil ist in einer langlochförmigen Öffnung festsetzbar, das eine Konizität aufweist. In der langlochförmigen Öffnung wird das Verbindungsteil mittels eines Stauch- und/oder Spreizvorganges formschlüssig festgesetzt.

Aufgabe der Erfindung ist es ein Verfahren aufzuzeigen, welches es ermöglicht Fügeelemente in Metallblechen mit hoher Verdrehungssicherung bzw. Drehmomentaufnahme bei reduziertem Aufwand zu befestigen. Zur Lösung dieser Aufgabe ist ein Verfahren entsprechend dem Patentanspruch 1 ausgebildet. Eine Anordnung aus einem Fügeelement und einem eine Fügeöffnung aufweisenden Metallblech ist Gegenstand des Patentanspruchs 10.

Ein wesentlicher Aspekt des erfindungsgemäßen Verfahrens ist darin zu sehen, dass der Füge- und Verriegelungsabschnitt in einem an den Kopf anschließenden Bereich einen Verriegelungsabschnitt bildet, wobei der Verrieglungsabschnitt von einem ringförmigen Abschnitt am Übergang zwischen dem Kopf und dem Füge- und Sicherungsabschnitt oder einer an den Kopf anschließenden Teillänge des Füge- und Sicherungsabschnittes gebildet ist und dass der halbe Durchmesser des Verriegelungsabschnittes gleich oder in etwa gleich dem maximalen radialen Abstand, aber größer ist als der minimale radiale Abstand, und dass beim Fügen und Fixieren des Fügeelementes der Verriegelungsabschnitt in eine von der rotationssymmetrischen Form abweichende Querschnittsform verformt wird.

Weiterhin vorteilhaft ist die Härte des Metallblechs gleich oder annähernd gleich oder im Wesentlichen gleich oder aber größer ist als die Härte des Materials des Fügeelementes

In einer Ausführungsvariante ist der Verriegelungsabschnitt mit einer zu einer Fügeelementachse rotationssymmetrischen Umfangsfläche ausgebildet, wobei bevorzugt der Verriegelungsabschnitt in eine der Querschnittsform der Fügeöffnung entsprechende Querschnittsform verformt wird. Vorteilhaft liegt der Verriegelungsabschnitt zumindest im Bereich derjenigen Oberflächenseiten des Metallbleches, gegen die der Kopf des Fügeelementes anliegt, von der rotationssymmetrischen Form abweichende Querschnittsform verformt wird.

Vorzugsweise ist der Verriegelungsabschnitt von einer axialen Teillänge des sich zu seinem freien Ende hin verjüngenden Füge- und Sicherungsabschnittes gebildet.

Auch kann ein als Nietbund ausgebildete Füge- und Sicherungsabschnitt in einen verformten Nietbund derart verformt werden, dass das Metallblech im Bereich des Randes der Fügeöffnung zwischen dem verformten Nietbund und dem Kopf des Fügeelementes eingespannt ist. Der Füge- und Sicherungsabschnitt weist vorteilhaft an seinem freien Ende einen Querschnitt auf, der größer ist als ein Querschnitt in einem Teilbereich zwischen dem Verriegelungsabschnitt und diesem freien Ende, und dass das Verriegeln des Fügeelementes am Metallblech durch Verpressen bzw. durch bleibendes Verformen des Metallbleches an der dem Kopf abgewandten Seite in die Hinterschneidung erfolgt.

In einer weiterer vorteilhaften Ausführungsvariante wird das Metallblech beim Fixieren des Fügeelementes zur Ausbildung eines domartigen Abschnittes derart verformt, dass das dem Kopf des Fügeelementes entfernt liegende Ende des Füge- und Sicherungsabschnittes oder des verformten Nietbundes in einer Ausnehmung des domartigen Abschnittes aufgenommen ist.

Vorzugsweise ist das Fügeelement ein Verbindungselement in Form einer Mutter oder eines Bolzens.

Ebenfalls ist Gegenstand der Erfindung eine Anordnung aus einem Fügeelement und einem eine Fügeöffnung aufweisenden Metallblech, wobei die im Metallblech vorgesehene Fügeöffnung einen von der Kreisform abweichenden Querschnitt aufweist, wobei das Fügeelement einen Kopf und einen von einer Stirn- oder Unterseite des Kopfes wegstehenden Füge- und Sicherungsabschnitt aufweist und der Füge- und Sicherungsabschnitt zumindest in einem an den Kopf anschließenden Bereich einen Verriegelungsabschnitt bildet, wobei der Verriegelungsabschnitt von einem ringförmigen Abschnitt am Übergang zwischen dem Kopf und dem Füge- und Sicherungsabschnitt oder einer an dem Kopf anschließenden Teillänge des Füge- und Sicherungsabschnitt gebildet ist, wobei der halbe Durchmesser des Verriegelungsabschnittes gleich oder im Wesentlichen gleich dem maximalen radialen Abstand ist, den der Rand der Fügeöffnung von der Mittelachse dieser Fügeöffnung aufweist, aber größer ist als der minimale radiale Abstand, den der Rand der Fügeöffnung von der Mittelachse der Fügeöffnung besitzt, wobei der Füge- und Sicherungsabschnitt des Fügeelementes in der Fügeöffnung des Metallbleches aufgenommen ist und wobei beim Fügen und Fixieren des Fügeelementes der Verriegelungsabschnitt in eine von der rotationssymmetrischen Form abweichende Querschnittsform verformt wird.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an Ausführungsbeispielen näher erläutert. Es zeigen:
Fig. 1 in vereinfachter Darstellung und im Schnitt ein Fügeelement gemäß der Erfindung in Form einer Nietmutter;
Fig. 2 in vereinfachter Darstellung eine Draufsicht auf die einen Nietbund aufweisende Unterseite des Fügeelementes der Figur 1;
Fig. 3 eine in einem aus einem Metallblech hergestellten Bauteil vorgesehene Fügeöffnung;
Fig. 4 in schematischer Darstellung das Bauteil mit dem an diesem Bauteil befestigten Fügeelement der Figuren 1 und 2;
Fig. 5 in einer Darstellung wie in Figur 1 ein Fügeelement gemäß einer weiteren Ausführungsform der Erfindung;
Fig. 6 eine Darstellung wie Figur 4 bei in dem Bauteil befestigtem Fügeelement der Figur 5;
Fig. 7 in einer Darstellung wie Figur 1 ein Beispiel eines Fügeelementes, welches nicht unter die Erfindung fällt.

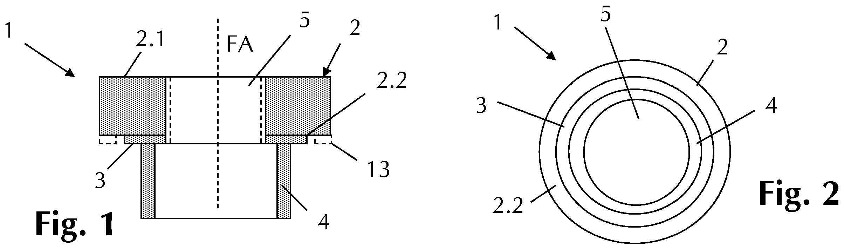

In den Figuren 1 - 4 ist 1 ein als Nietmutter ausgebildetes Fügeelement aus einem metallischen Werkstoff, vorzugsweise aus Stahl. Das Fügeelement 1 ist mit einem Kopf oder Fügeelementkörper 2 ausgebildet, der an seinem Umfang beispielsweise kreiszylinderförmig ausgebildet ist und eine Oberseite 2.1 und eine Unterseite 2.2 aufweist. An der Unterseite 2.2 ist der Fügeelementkörper 2 mit einem Verriegelungsabschnitt 3 versehen, der bei der dargestellten Ausführungsform eine eine Fügeelementachse FA kreiszylinderförmig anschließende Umfangsfläche aufweist und in Richtung der Fügeelementachse FA eine axiale Dicke besitzt, die kleiner ist als die entsprechende axiale Dicke des Fügeelementkörpers 2. Der Außendurchmesser des Verriegelungsabschnittes 3 ist kleiner als der Außendurchmessers des Fügeelementkörpers 2. An den Verriegelungsabschnitt 3 schließt sich ein Füge und Sicherungsabschnitt in Form eines Nietbund 4 an, der die Fügeelementachse FA konzentrisch umschließend hohlzylinder- oder hülsenartig ausgebildet ist und einen Außendurchmesser aufweist, der kleiner ist als der Außendurchmesser des Verriegelungsabschnittes 3. Im Fügeelementkörper 2 ist achsgleich mit der Fügeelementachse FA eine Gewindebohrung 5 vorgesehen.

Zum Befestigen des Fügeelementes 1 in einem Bauteil 6 bzw. in dem dieses Bauteil bildende Metallblech 7 ist in diesem Metallblech eine Fügeöffnung 8 eingebracht, die einen von der Querschnittsform des Verriegelungsabschnittes 3 abweichende Querschnittsform aufweist, d.h. eine von der Kreisform abweichende Querschnittsform. Bei der dargestellten Ausführungsform ist die Fügeöffnung 8 polygonartig ausgebildet und besitzt einen achteckigen Querschnitt. Die Abmessungen der Fügeöffnungen 8 sind so gewählt, dass der maximale radiale Abstand r1 des Randes 9 von der Mittelachse M der Fügeöffnung 8 bzw. von der Achse FA gleich oder in etwa gleich dem halben Durchmesser des Verriegelungsabschnittes 3 ist und der minimale radiale Abstand r2 des Randes 9 von der Mittelachse M aber kleiner ist als der halbe Durchmesser des Verriegelungsabschnittes 3, Die maximalen und der minimalen radialen Abstände r1 und r2 wechseln sich in Umfangsrichtung der Fügeöffnung 8 ab. Der maximale Abstand r1 liegt an den Eckbereichen der Fügeöffnung 8 und der minimale radiale Abstand r2 liegt zwischen zwei Eckbereichen der Fügeöffnung 8 vor.

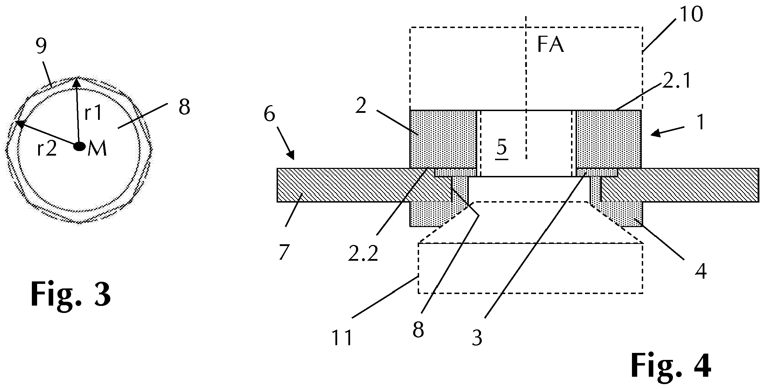

Das Material des Metallbleches 7 besitzt vorzugsweise eine Härte die gleich oder im Wesentlichen gleich, vorzugsweise aber größer ist als die Härte des Materials des Fügeelementes 1. Die Härte des Metallblechs 7 kann aber auch annähernd gleich der Härte des Materials des Fügeelementes 7 sein, d.h. beispielsweise bis zu 20% geringer sein als die Härte des Materials des Fügeelementes 7. Nach dem Einsetzen des Fügeelementes 1 mit dem Nietbund 4 in die Fügeöffnung 8 in der Weise, dass der Kopf 2 mit seiner Unterseite 2.2 gegen die in der Figur 4 obere Oberflächenseite des Metallbleches 7 anliegt, erfolgt mit Hilfe eines die beiden Werkzeugteile 10 und 11 aufweisenden Werkzeugs das Verpressen und Fixieren des Fügeelementes 1 durch Vernieten bzw. Umformen des Nietbundes 4 in der Weise, dass das Metallblech 7 zwischen dem Kopf und dem umgeformten Nietbund 4 im Bereich des Randes der Fügeöffnung 8 eingespannt ist. Zugleich wird bei diesem Vernieten der Verriegelungsabschnitt 3 so verformt, dass er die Form des Randes 9 der Fügeöffnung 8 annimmt, d.h. nach dem Verformen ebenfalls den von der Kreisform abweichenden Querschnitt besitzt. Das überschüssige Material des ursprünglichen Verriegelungsabschnittes 3 wird dabei durch bleibendes Verformen axial im Bezug auf die Achse FA in der Fügeöffnung 8 aufgenommen. Bei der dargestellten Ausführungsform ist die axiale Dicke des Verriegelungsabschnitts kleiner als die Dicke des Metallblechs 7. Die axiale Länge des nicht verformten Nietbundes 4 ist größer als die Dicke des Metallblechs 7.

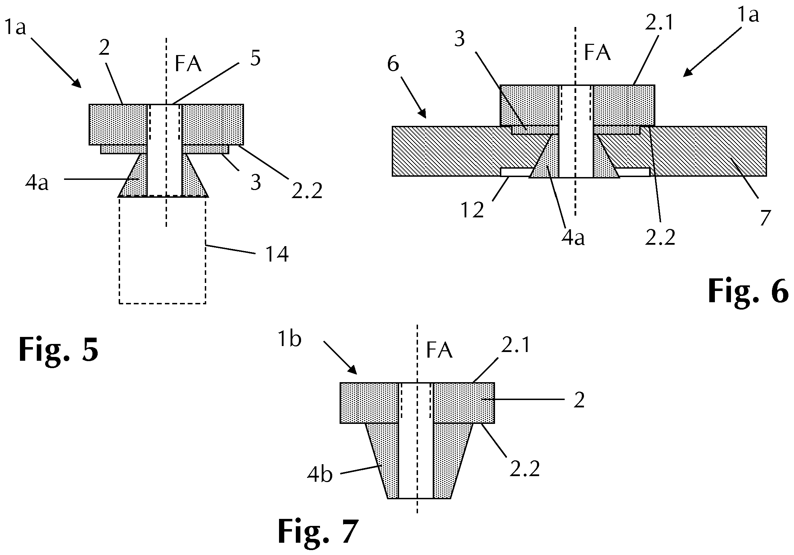

Die Figuren 5 und 6 zeigen als weitere Ausführungsform ein Fügeelement 1a, welches anstelle des Nietbundes 4 einen Füge- und Sicherungsabschnitt 4a aufweist, der wiederum an seiner Außenfläche rotationssymmetrisch zu der Achse FA ausgebildet ist, dessen Außendurchmesser sich aber zu dem, dem Kopf 2 abgewandten Ende hin kegelstumpfartig vergrößert. Die axiale Länge des Füge- und Sicherungsabschnittes 4a kürzer ist als die entsprechende axiale Länge des Nietbundes 4 und entspricht beispielsweise der Dicke des Metallbleches 7. Nach dem Einsetzen des Fügeelementes 1a in die Fügeöffnung 8 in der Weise, dass der Kopf 2 mit seiner Unterseite 2.2 gegen die in der Figur 6 obere Oberflächenseite des Metallbleches 7 anliegt, wird letzteres im Bereich seiner Unterseite am Rand der Fügeöffnung 8 bei 12 derart bleibend verformt, dass der Fügeabschnitt 4a von dem Material des Metallbleches 7 formschlüssig hintergriffen ist.

Das Fügeelement 1a besitzt wiederum an den Kopf 2 anschließend den Verriegelungsabschnitt 3, der beim Fügen und Fixieren des Fügeelementes 1a in der gleichen Weise, wie vorstehend für das Fügeelement 1 beschrieben in die von der Kreisform abweichende Querschnittsform der Fügeöffnung 8 verformt wird und hierdurch eine hohe Drehsicherung bzw. Drehmomentaufnahme für das im Bauelement 6 verankerte Fügeelement 1a bewirkt.

Die Figur 7 zeigt als weitere Ausführungsform ein Fügeelement 1b mit einem als Nietbund ausgebildeten Füge- und Sicherungsabschnitt 4b, der an seiner Umfangsfläche rotationssymmetrisch zu der Achse FA ausgebildet ist, sich aber zu dem, dem Kopf 2 entfernt liegenden freien Ende hin leicht kegelförmig verjüngt. Zumindest in der Nähe des Kopfes 2 besitzt der Füge- und Sicherungsabschnitt 4b einen Bereich mit einem Radius, der gleich oder in etwa gleich dem größeren radialen Abstand r1, aber größer ist als der kleinere radiale Abstand r2 der Fügeöffnung 8. Beim Einsetzen und Verformen des Füge- und Sicherungsabschnittes 4b zu dem verformten Nietbund wird dieser vorgenannte Bereich des Füge- und Sicherungsabschnittes 4b wiederum so verformt, dass er die von der Kreisform abweichende Querschnittsform der Fügeöffnung 8 aufweist und hierdurch die hohe Drehmomentsicherung des im Bauelement 6 befestigten Fügeelementes 1b gewährleistet ist.

Allen Ausführungen der Erfindung ist gemeinsam, dass das jeweilige Fügeelement 1, 1a, 1b an dem Verriegelungsabschnitt 3 oder an dem diesen Verriegelungsabschnitt bildenden Bereich des Füge- und Sicherungsabschnittes 4, 4a und 4b an seinem Umfang rotationssymmetrisch zur Achse FA ausgebildet ist, sodass beim Einsetzen des Füge- und Sicherungsabschnittes 4, 4a und 4b in die Fügeöffnung nicht auf eine vorgegebenen Orientierung oder Drehstellung des Fügeelementes geachtet werden muss, d.h. das Fügeelement in jeder Dreh- oder Winkelstellung in die Fügeöffnung 8 eingesetzt werden kann, wodurch das Anbringen des Fügelementes 1, 1a, 1b am Bauelement 6 wesentlich vereinfacht wird. Allen Ausführungen der Erfindung ist weiterhin gemeinsam, dass beim Fügen und Sichern bzw. Verpressen und Vernieten des Fügeelementes 1, 1a, 1b die Sicherung gegen Verdrehen an derjenigen Oberflächenseite des Metallbleches 7 erfolgt, gegen die auch der Kopf 2 des Fügeelementes 1, 1a, 1b anliegt, und zwar durch Verformen des Verriegelungsabschnittes 3 oder des diesen Verriegelungsabschnitt bildenden Teilbereichs des Füge- und Sicherungsabschnittes 4b.

Die Erfindung wurde voranstehend an Ausführungsbeispielen beschrieben. Es versteht sich, dass zahlreiche Abwandlungen möglich sind. So wurde vorstehend davon ausgegangen, dass die Fügeöffnung 8 einen achteckigen Querschnitt aufweist. Selbstverständlich sind auch andere von der Kreisform abweichende Querschnitte möglich, beispielsweise polygonale Querschnitte jeglicher Art, ovale oder rechteckförmige Querschnitte, Fügeöffnungen mit einem gewellten Rand, an dem sich Vertiefungen und Vorsprünge abwechseln, sowie Kombinationen derartiger Querschnitte.

Weiterhin besteht die Möglichkeit, dass beim Fixieren des Fügeelementes das jeweilige Metallblech domartig derart verformt wird, dass sich schließlich der Kopf 2 des Fügeelementes 1, 1a, 1b auf der konvexen Außenseite eines domartigen Abschnittes des Metallbleches 7 befindet und der zu einem verformten Nietbund verformte oder im Metallblech verpresste Füge- und Sicherungsabschnitt 4, 4a und 4b sich an der konkaven Seite des domartig verformten Metallblechs 7 innerhalb einer dortigen Ausnehmung befindet, sodass der Füge- und Sicherungsabschnitt 4, 4a und 4b nicht über die dem Kopf 2 abgewandte Oberflächenseite des Metallblechs 7 vorsteht.

Weiterhin können zusätzlich zu dem Verriegelungsabschnitt 3 an der unteren Stirnseite 2.2 bezogen auf die Achse FA gegenüber dem Verriegelungsabschnitt 3 radial nach außen versetzt und von diesem beabstandet mehrere Vorsprünge oder aber ein den Verriegelungsabschnitt 3 mit radialem Abstand umgebender Ring vorgesehen sein, wie dies in der Figur 1 mit 13 angedeutet ist.

Vorstehend wurde weiterhin davon ausgegangen, dass das Fügeelement 1, 1a bzw. 1b eine Mutter ist. Selbstverständlich kann das Fügeelement auch eine andere Form aufweisen bzw. als Verbindungselement anderer Art ausgeführt sein, beispielsweise als Bolzen mit einem Bolzenschaft, wie dies in der Figur 5 mit der unterbrochenen Linie 14 angedeutet ist.

### Bezugszeichenliste

- 1, 1a, 1b: Fügeelement
- 2: Kopf
- 2.1,2.2: Stirnseite
- 3: Verriegelungsabschnitt
- 4, 4a, 4b: Füge- und Sicherungsabschnitt
- 5: Gewindebohrung
- 6: Bauteil
- 7: Metallblech
- 8: Fügeöffnung
- 9: Rand der Fügeöffnung
- 10, 11: Werkzeugteil
- 12: verformter Materialabschnitt des Metallbleches 7
- 13: Ring
- 14: Bolzenschaft

- FA: Fügeelementachse
- M: Mittelachse der Fügeöffnung
- r1, r2: radialer Abstand

## Patentansprüche

1. Verfahren zum verdrehungsgesicherten Verankern eines Fügeelementes (1, 1a, 1b) in einem Metallblech (7) durch Einsetzen eines von einem Kopf (2) des Fügeelementes (1, 1a, 1b) wegstehenden Füge- und Sicherungsabschnittes (4, 4a, 4b) in eine im Metallblech (7) vorgesehene Fügeöffnung (8), die einen von der Kreisform abweichenden Querschnitt aufweist, sodass ein Rand (9) der Fügeöffnung (8) wenigstens einen Bereich mit einem maximalen Abstand (r1) von einer Mittelachse (M) der Fügeöffnung (8) und wenigstens einen Bereich mit einem minimalen radialen Abstand (r2) von der Mittelachse (M) der Fügeöffnung (8) bildet, wobei das Fügeelement nach dem Verankern mit dem Kopf (2) gegen das Metallblech (7) anliegt, bei dem der Füge- und Sicherungsabschnitt (4, 4a, 4b) in einem an den Kopf (2) anschließenden Bereich einen Verriegelungsabschnitt (3) bildet, wobei der Verriegelungsabschnitt (3) von einem ringförmigen Abschnitt am Übergang zwischen dem Kopf (2) und dem Füge- und Sicherungsabschnitt (4, 4a) oder einer an den Kopf (2) anschließenden Teillänge des Füge- und Sicherungsabschnitt (4, 4a) gebildet ist, bei dem der halbe Durchmesser des Verriegelungsabschnittes (3) gleich oder in etwa gleich dem maximalen radialen Abstand (r1), aber größer ist als der minimale radiale Abstand (r2), und bei dem beim Fügen und Fixieren des Fügeelementes (1, 1a, 1b) der Verriegelungsabschnitt (3) in eine von der rotationssymmetrischen Form abweichende Querschnittsform verformt wird.

2. Verfahren nach Anspruch 1, **dadurch gekennzeichnet, dass** die Härte des Metallblechs gleich oder annähernd gleich oder im Wesentlichen gleich oder aber größer ist als die Härte des Materials des Fügeelementes (1, 1a, 1b).

3. Verfahren nach Anspruch 1 oder 2, **dadurch gekennzeichnet, dass** Verriegelungsabschnitt (3) mit einer zu einer Fügeelementachse (FA) rotationssymmetrischen Umfangsfläche ausgebildet ist.

4. Verfahren nach Anspruch 1 oder 2, **dadurch gekennzeichnet, dass** der Verriegelungsabschnitt (3) in eine der Querschnittsform der Fügeöffnung (8) entsprechende Querschnittsform verformt wird.

5. Verfahren nach einem der vorhergehenden Ansprüche, **dadurch gekennzeichnet, dass** der Verriegelungsabschnitt (3) zumindest im Bereich derjenigen Oberflächenseiten des Metallbleches (7), gegen die der Kopf (2) des Fügeelementes (1, 1a, 1b) anliegt, von der rotationssymmetrischen Form abweichende Querschnittsform verformt wird.

6. Verfahren nach einem der vorhergehenden Ansprüche, **dadurch gekennzeichnet, dass** ein als Nietbund ausgebildete Füge-und Sicherungsabschnitt (4, 4b) in einen verformten Nietbund derart verformt wird, dass das Metallblech (7) im Bereich des Randes (9) der Fügeöffnung (8) zwischen dem verformten Nietbund und dem Kopf (2) des Fügeelementes (1, 1b) eingespannt ist.

7. Verfahren nach einem der vorhergehenden Ansprüche, **dadurch gekennzeichnet, dass** der Füge- und Sicherungsabschnitt (4a) an seinem freien Ende einen Querschnitt aufweist, der größer ist als ein Querschnitt in einem Teilbereich zwischen dem Verriegelungsabschnitt (3) und diesem freien Ende, und dass das Verriegeln des Fügeelementes (1a) am Metallblech (7) durch Verpressen bzw. durch bleibendes Verformen des Metallbleches (7) an der dem Kopf (2) abgewandten Seite in die Hinterschneidung erfolgt.

8. Verfahren nach einem der vorhergehenden Ansprüche, **dadurch gekennzeichnet, dass** das Metallblech (7) beim Fixieren des Fügeelementes (1, 1a, 1b) zur Ausbildung eines domartigen Abschnittes derart verformt wird, dass das dem Kopf (2) des Fügeelementes (1, 1a, 1b) entfernt liegende Ende des Füge- und Sicherungsabschnittes oder des verformten Nietbundes in einer Ausnehmung des domartigen Abschnittes aufgenommen ist.

9. Verfahren nach einem der vorhergehenden Ansprüche, **dadurch gekennzeichnet, dass** das Fügeelement (1, 1a, 1b) ein Verbindungselement in Form einer Mutter oder eines Bolzens ist.

10. Anordnung aus einem Fügeelement (1, 1a, 1b) und einem eine Fügeöffnung (8) aufweisenden Metallblech (7), wobei die im Metallblech (7) vorgesehene Fügeöffnung (8) einen von der Kreisform abweichenden Querschnitt aufweist, wobei das Fügeelement (1, 1a, 1b) einen Kopf (2) und einen von einer Stirn- oder Unterseite (2.2) des Kopfes (2) wegstehenden Füge- und Sicherungsabschnitt (4, 4a, 4b) aufweist und der Füge- und Sicherungsabschnitt (4, 4a, 4b) in einem an den Kopf (2) anschließenden Bereich einen Verriegelungsabschnitt (3) bildet, wobei der Verriegelungsabschnitt (3) von einem ringförmigen Abschnitt am Übergang zwischen dem Kopf (2) und dem Füge- und Sicherungsabschnitt (4, 4a) oder einer an dem Kopf (2) anschließenden Teillänge des Füge- und Sicherungsabschnitt (4, 4a) gebildet ist, wobei der halbe Durchmesser des Verriegelungsabschnittes (3) gleich oder im Wesentlichen gleich einem maximalen radialen Abstand (r1) ist, den ein Rand (9) der Fügeöffnung (8) von der Mittelachse (M) dieser Fügeöffnung (8) aufweist, aber größer ist als ein minimaler radialer Abstand (r2), den der Rand (9) der Fügeöffnung (8) von der Mittelachse (M) der Fügeöffnung (8) besitzt, wobei der Füge- und Sicherungsabschnitt (4, 4a) des Fügeelementes (1, 1a, 1b) in der Fügeöfffnung (8) des Metallbleches (7) aufgenommen ist und wobei beim Fügen und Fixieren des Fügeelementes (1, 1a, 1b) der Verriegelungsabschnitt (3) in eine von der rotationssymmetrischen Form abweichende Querschnittsform verformt wird.

11. Anordnung nach Anspruch 10, **dadurch gekennzeichnet, dass** der Verriegelungsabschnitt (3) des Fügeelementes (1, 1a, 1b) an seiner Umfangsfläche rotationssymmetrisch zu einer Fügeelementachse (FA) ausgeführt ist und/oder dass der Verriegelungsabschnitt (3) ringförmig mit kreiszylinderförmiger Umfangsfläche oder mit kegelförmiger Umfangsfläche ausgebildet ist.

12. Anordnung nach Anspruch 10 oder 11, **dadurch gekennzeichnet, dass** bezogen auf die Fügeelementachse (FA) die axiale Abmessung des Verriegelungsabschnittes (3) höchstens gleich, vorzugsweise aber kleiner ist als die Dicke des Metallblechs (7).

13. Anordnung nach einem der Ansprüche 10 bis 12, **dadurch gekennzeichnet, dass** der Füge- und Sicherungsabschnitt (4, 4b) als Nietbund oder als ein eine Hinterschneidung bildender Abschnitt ausgebildet ist.

## Claims

1. A method for anchoring a joint element (1, 1a, 1b) in a metal sheet (7) in a manner secured against rotation by inserting a joint and securing section (4, 4a, 4b) protruding from a head (2) of the joint element (1, 1a, 1b) into a joint opening (8) provided in the metal sheet (7), said opening having a cross section deviating from a circular shape, such that an edge (9) of the joint opening (8) forms at least one area with a maximum distance (r1) from a centre axis (M) of the joint opening (8) and at least one area with a minimum radial distance (r2) from the centre axis (M) of the joint opening (8), wherein after having been anchored, the joint element with its head (2) rests against the metal sheet (7), wherein the joint and securing section (4, 4a, 4b) forms a locking section (3) in an area adjoining the head (2), wherein the locking section (3) is formed by a ring-shaped section at the transition between the head (2) and the joint and securing section (4, 4a) or by a partial length of the joint and securing section (4, 4a) adjoining the head (2), in which half of the diameter of the locking section (3) is equal or approximately equal to the maximum radial distance (r1) but greater than the minimum radial distance (r2), and in which the locking section (3) is deformed into a cross-sectional shape deviating from the rotationally symmetric shape during the joining and fastening of the joint element (1, 1a, 1b).

2. Method according to claim 1, **characterised in that** the hardness of the metal sheet is equal or approximately equal or essentially equal or else greater than the hardness of the material of the joint element (1, 1a, 1b).

3. Method according to claim 1 or 2, **characterised in that** the locking section (3) is designed as having a circumferential surface that is rotationally symmetric to a joint element axis (FA).

4. Method according to claim 1 or 2, **characterised in that** the locking section (3) is deformed into a cross-sectional shape corresponding to the cross-sectional shape of the joint opening (8).

5. Method according to any one of the preceding claims, **characterised in that** the locking section (3) is deformed into a cross-sectional shape deviating from the rotationally symmetric form in at least the area of those surfaces of the metal sheet (7) against which the head (2) of the joint element (1, 1a, 1b) fits closely.

6. Method according to any one of the preceding claims, **characterised in that** a joint and securing section (4, 4b) designed as a rivet collar is deformed into a deformed rivet collar in such a manner that the metal sheet (7) in the area of the edge (9) of the joint opening (8) is clamped between the deformed rivet collar and the head (2) of the joint element (1, 1b).

7. Method according to any one of the preceding claims, **characterised in that** the joint and securing section (4a) has a cross section at its free end, which is greater than a cross section in a partial area between the locking section (3) and this free end, and that the locking of the joint element (1a) on the metal sheet (7) is carried out by grouting or permanently deforming the metal sheet (7) into the undercut on the side facing away from the head (2).

8. Method according to any one of the preceding claims, **characterised in that** the metal sheet (7) during the fastening of the joint element (1, 1a, 1b) is deformed to form a dome-shaped section in such a manner that the end of the joint and securing section or end of the deformed rivet collar, which is located away from the head (2) of the joint element (1, 1a, 1b), is received in a recess of the dome-shaped section.

9. Method according to any one of the preceding claims, **characterised in that** the joint element (1, 1a, 1b) is a connection element in the form of a nut or a bolt.

10. An arrangement of a joint element (1, 1a, 1b) and a metal sheet (7) having a joint opening (8), wherein the joint opening (8) provided in the metal sheet (7) has a cross section deviating from a circular shape, wherein the joint element (1, 1a, 1b) comprises a head (2) and a joint and securing section (4, 4a, 4b) protruding away from the face or bottom side (2.2) of the head (2) and the joint and securing section (4, 4a, 4b) forms a locking section (3) in an area adjoining the head (2), wherein the locking section (3) is formed by a ring-shaped section at the transition between the head (2) and the joint and securing section (4, 4a) or by a partial length of the joint and securing section (4, 4a) adjoining the head (2), wherein half of the diameter of the locking section (3) is equal or essentially equal to a maximum radial distance (r1), which the edge (9) of the joint opening (8) has from the centre axis (M) of this joint opening (8), but greater than the minimum radial distance (r2), which the edge (9) of the joint opening (8) has from the centre axis (M) of the joint opening (8), wherein the joint and securing section (4, 4a) of the joint element (1, 1a, 1b) is received in the joint opening (8) of the metal sheet (7) and wherein the locking section (3) is deformed into a cross-sectional shape deviating from the rotationally symmetric shape during the joining and fastening of the joint element (1, 1a, 1b).

11. Arrangement according to claim 10, **characterised in that** the locking section (3) of the joint element (1, 1a, 1b) at its circumferential surface is designed to be rotationally symmetric to a joint element axis (FA) and/or that the locking section (3) is designed in a ring-shape with a circular cylindrical circumferential surface or with a cone-shaped circumferential surface.

12. Arrangement according to claim 10 or 11, **characterised in that**, with regard to the joint element axis (FA), the axial dimension of the locking section (3) is at most equal to, but preferably smaller than, the thickness of the metal sheet (7).

13. Arrangement according to any one of claims 10 to 12, **characterised in that** the joint and securing section (4, 4b) is designed as a rivet collar or as a section forming an undercut.

## Revendications

1. Procédé, destiné à l'ancrage empêchant toute rotation d'un élément à assembler (1, 1a, 1a) dans une tôle métallique (7) par insertion d'un tronçon d'assemblage et de blocage (4, 4a, 4b) débordant d'une tête (2) de l'élément à assembler (1, 1a, 1b) dans un orifice d'assemblage (8) prévu dans la tôle métallique (7) qui comporte une section transversale différente de la forme circulaire, de telle sorte qu'un bord (9) de l'orifice d'assemblage (8) forme au moins une zone présentant un écart (r1) maximal par rapport à un axe médian (M) de l'orifice d'assemblage (8) et au moins une zone présentant un écart (r2) radial minimal par rapport à l'axe médian (M) de l'orifice d'assemblage (8), après l'ancrage, l'élément à assembler reposant par la tête (2) sur la tôle métallique (7), pendant lequel dans une zone se raccordant à la tête (2), le tronçon d'assemblage et de blocage (4, 4a, 4b) forme un tronçon de verrouillage (3), le tronçon de verrouillage (3) étant formé d'un tronçon de forme annulaire sur le passage entre la tête (2) et le tronçon d'assemblage et de blocage (4, 4a) ou d'une longueur partielle du tronçon d'assemblage et de blocage (4, 4a) se raccordant sur la tête (2), lors duquel le demi-diamètre du tronçon de verrouillage (3) est égal ou approximativement égal à l'écart (r1) radial maximal, mais supérieur à l'écart (r2) radial minimal, et lors duquel, lors de l'assemblage et de la fixation de l'élément à assembler (1, 1a, 1b), on déforme le tronçon de verrouillage (3) en une forme de section transversale différente de la forme symétrique en rotation.

2. Procédé selon la revendication 1, **caractérisé en ce que** la dureté de la tôle métallique est égale ou approximativement égale ou en sensiblement égale ou encore supérieure à la dureté de la matière de l'élément à assembler (1, 1a, 1b).

3. Procédé selon la revendication 1 ou 2, **caractérisé en ce que** tronçon de verrouillage (3) est réalisé avec une surface périphérique symétrique en rotation par rapport à un axe de l'élément à assembler (FA).

4. Procédé selon la revendication 1 ou 2, **caractérisé en ce qu'**on déforme le tronçon de verrouillage (3) en une forme de section transversale correspondant à la forme de section transversale de l'orifice d'assemblage (8).

5. Procédé selon l'une quelconque des revendications précédentes, **caractérisé en ce qu'**on déforme le tronçon de verrouillage (3) dans une forme de section transversale différente de la forme symétrique en rotation au moins dans la zone des faces superficielles de la tôle métallique (7) sur laquelle la tête (2) de l'élément à assembler (1, 1a, 1b) repose.

6. Procédé selon l'une quelconque des revendications précédentes, **caractérisé en ce qu'**on déforme un tronçon d'assemblage et de blocage (4, 4b) réalisé sous la forme d'un collet en un collet déformé de telle sorte que dans la zone du bord (9) de l'orifice d'assemblage (8), la tôle métallique (7) soit enserrée entre le collet déformé et la tête (2) de l'élément à assembler (1, 1b).

7. Procédé selon l'une quelconque des revendications précédentes, **caractérisé en ce que** sur son extrémité libre, le tronçon d'assemblage et de blocage (4a) présente une section transversale qui est supérieure à une section transversale dans une zone partielle entre le tronçon de verrouillage (3) et ladite extrémité libre et **en ce que** le verrouillage de l'élément à assembler (1a) sur la tôle métallique (7) s'effectue par compression ou par déformation restante de la tôle métallique (7) sur la face opposée à la tête (2) dans la contre-dépouille.

8. Procédé selon l'une quelconque des revendications précédentes, **caractérisé en ce que** lors de la fixation de l'élément à assembler (1, 1a, 1b), pour créer un tronçon en forme de dôme, on déforme la tôle métallique (7) de telle sorte que l'extrémité du tronçon d'assemblage et de blocage ou du collet déformé éloigné de la tête (2) de l'élément à assembler (1, 1a, 1b) soit logée dans un évidement du tronçon en forme de dôme.

9. Procédé selon l'une quelconque des revendications précédentes, **caractérisé en ce que** l'élément à assembler (1, 1a, 1b) est un élément de liaison sous la forme d'un écrou ou d'un boulon.

10. Agencement d'un élément à assembler (1, 1a, 1a) et d'une tôle métallique (7) comportant un orifice d'assemblage (8), l'orifice d'assemblage (8) prévu dans la tôle métallique (7) présentant une section transversale différente de la forme circulaire, l'élément à assembler (1, 1a, 1b) comportant une tête (2) et un tronçon d'assemblage et de blocage (4, 4a, 4b) débordant d'une face frontale ou inférieure (2.2) de la tête (2) et dans une zone se raccordant sur la tête (2), le tronçon d'assemblage et de blocage (4, 4a, 4b) formant un tronçon de verrouillage (3), le tronçon de verrouillage (3) étant formé d'un tronçon de forme annulaire sur le passage entre la tête (2) et le tronçon d'assemblage et de blocage (4, 4a) ou d'une longueur partielle du tronçon d'assemblage et de blocage (4, 4a) se raccordant sur la tête (2), le demi diamètre du tronçon de verrouillage (3) étant égal ou sensiblement égal à un écart (r1) radial maximal que présente un bord (9) de l'orifice d'assemblage (8) par rapport à l'axe médian (M) dudit orifice d'assemblage (8), mais supérieur à un écart (r2) radial minimal que présente le bord (9) de l'orifice d'assemblage (8) par rapport à l'axe médian (M) de l'orifice d'assemblage (8), le tronçon d'assemblage et de blocage (4, 4a) de l'élément à assembler (1, 1a, 1b) étant logé dans l'orifice d'assemblage (8) de la tôle métallique (7) et lors de l'assemblage et de la fixation de l'élément à assembler (1, 1a, 1b), le tronçon de verrouillage (3) étant déformé dans une forme de section transversale différente de la forme symétrique en rotation.

11. Agencement selon la revendication 10, **caractérisé en ce que** sur sa surface périphérique, le tronçon de verrouillage (3) de l'élément à assembler (1, 1a, 1b) est réalisé en étant symétrique en rotation par rapport à un axe de l'élément à assembler (FA) et/ou **en ce que** le tronçon de verrouillage (3) est conçu de forme annulaire, avec une surface périphérique en forme de cylindre circulaire ou avec une surface périphérique de forme conique.

12. Agencement selon la revendication 10 ou 11, **caractérisé en ce qu'**en rapport de l'axe de l'élément à assembler (FA), la dimension axiale du tronçon de verrouillage (3) est au maximum égale, mais de préférence inférieure à l'épaisseur de la tôle métallique (7).

13. Agencement selon l'une quelconque des revendications 10 à 12, **caractérisé en ce que** le tronçon d'assemblage et de blocage (4, 4b) est réalisé sous la forme d'un collet ou sous la forme d'un tronçon formant une contre-dépouille.
